Europäisches Patentamt

European Patent Office

Office européen des brevets

(11) Publication number: 0 295 900
A2

# EUROPEAN PATENT APPLICATION

(21) Application number: 88305482.7

(22) Date of filing: 16.06.88

(51) Int. Cl.⁴: **A46B 1/00 , B29C 45/26**

(30) Priority: 16.06.87 GB 8714036

(43) Date of publication of application:
21.12.88 Bulletin 88/51

(84) Designated Contracting States:
DE FR GB IT

(71) Applicant: **Cole, Rodney David**
**Welbeck House High Street**
**Guildford Surrey(GB)**

(72) Inventor: **Cole, Rodney David**
**Welbeck House High Street**
**Guildford Surrey(GB)**

(74) Representative: **Beresford, Keith Denis Lewis**
**et al**
**BERESFORD & Co. 2-5 Warwick Court High**
**Holborn**
**London WC1R 5DJ(GB)**

(54) **Integrally moulded brushes.**

(57) A gum brush is moulded using a mould having a
stack of transverse plates formed with divergent ta-
pering grooves (84, 86) to produce brush bristles.
The width (T) of each groove is greater than its
depth (L) so that the bristles are more flexible upon
bending in the longitudinal direction of the brush
than in the transverse direction.

FIG. 9

EP 0 295 900 A2

## INTEGRALLY MOULDED BRUSHES

This invention relates to integrally moulded brushes and to a mould for forming such brushes.

US 4,422,986 (W E Cole) describes a mould having a plurality of generally wedge-shaped mould pieces arranged in a series face-to-face around a stem-defining cavity, with grooves formed in the abutting faces of the mould pieces to provide bristle-defining cavities extending generally radially away from the stem-defining cavity. The mould pieces are in two sets, each forming about half of the mould, and after injection of plastics material into the cavities, the sets are separated so that the moulded material can be removed from the mould.

In the formation of very small brushes, the arrangement described in US 4,422,986 has some limitations, which the present invention aims to overcome. In accordance with one aspect of the present invention, there is provided a mould for forming a gum-brush or the like, comprising a pair of separable complementary mould portions defining a cavity for forming an elongate spine portion of the brush and cavities for forming a plurality of rows of bristles of the brush, at least one of the mould portions comprising a stack of separable plates each lying in a plane extending transversely of the spine-forming cavity, and at least half of the plates of each mould portion each having a plurality of grooves each open at one end to the spine-forming cavity and closed at the other end, and each defining a respective one of the bristle-forming cavities.

The advantages of this arrangement over that described in US 4,422,986 are that the plates can be manufactured more easily then the wedge-shaped mould pieces used in US 4,422,986, for example by engraving of plain blank plates, and the spacing of the bristle-defining cavities, where they meet the stem-defining cavity, can be made smaller than in the arrangement of US 4,422,986, whilst enabling the mould pieces to be of sufficiently strong construction. Indeed, in a preferred arrangement of the mould of the present invention, the spacing between adjacent grooves in each plate adjacent the spine-defining cavity is less than twice, and is in one example about equal to, the width of the grooves adjacent the spine-defining cavity.

In one embodiment, each bristle forming cavity has a cross-section adjacent the spine-forming cavity which is wider in the transverse direction of the spine-forming cavity than in the longitudinal direction thereof. In other words, the width of each groove is greater than its depth. This has the advantage that, for a particular cross-sectional area of the bristle-forming cavity, the mould plate will be stronger than if the depth of each groove were equal to or greater than its width. This feature also causes the bristles of the brush to be more flexible upon bending in the longitudinal direction than in the transverse direction, which makes the mould particularly suitable for making gum brushes, as described in more detail below.

Preferably, the stack of plates of one of the mould portions is one of a pair of stacks of plates lying side by side and spaced apart, the mould further comprising an ejector member disposed between the pair of stacks and movable into the stem forming cavity. Thus, the ejector member can be moved to eject a moulded brush from that mould portion.

In the case where bristle forming cavities are provided in both of the mould portions, so as to form a double-sided brush, the cavities in one of the mould portions may be generally shorter than those in the other mould portion, so the two sides of the brush have different characteristics.

Preferably, each of the grooves tapers from the open end to the closed end thereof, thus facilitating release of the bristles from the mould. In particular, preferably both the width of each groove and the depth thereof decrease towards the closed end of the groove.

In one arrangement, each plate in at least one of the stacks has grooves formed in one of the faces thereof, the other face thereof being plain. In this case, all of the plates in that stack can be identical.

In another arrangement, alternate plates in at least one of the stacks are formed with grooves in both faces thereof, and the remaining plates in the stack are plain. In this case, the grooves in the opposite faces are preferably staggered. Thus the plate is not unduly weakened. Furthermore, in the case of staggered grooves, the plain intermediate plates are not necessarily required, in which case all of the plates in that stack can be identical.

In accordance with another aspect of the invention, there is provided a brush, such as a gum brush, which is moulded using a mould according to said one aspect of the invention.

In accordance with a further aspect of the invention, there is provided a moulded brush comprising an elongate spine portion and a plurality of rows of bristles projecting from the spine portion and lying in respective transverse planes, each bristle having a cross-section adjacent the spine portion which is substantially wider in the transverse direction of the spine portion than in the longitudinal direction thereof, so that the bristle is more flexible upon bending in said longitudinal direction than in said transverse direction.

These features are particularly suitable for a gum brush, which is generally used with a brushing action in the longitudinal direction of the brush. The bristles of a gum brush need to be soft in view of the delicate nature of the gums, and yet sufficiently strong that they do not break when removed from the mould or when being used. By forming the bristles so that they are relatively narrow in the longitudinal direction, they can be made sufficiently flexible for use, and yet by forming them relatively wider in the transverse direction, there is sufficient material in the bristle to give the required strength.

These features are also particularly suitable for a tooth brush for cleaning between the teeth. When used for such a purpose, the brushing action is in the transverse direction of the brush. With such a brushing action, the narrower cross-sectional dimension of the bristles corresponds to the width of the gaps between the teeth, and thus the bristles can more easily enter the gaps between the teeth. Furthermore, the bristles are stiffer in the direction of brushing, and so a stronger brushing action can be obtained.

Preferably, the cross-section of each bristle adjacent the spine portion is about twice or three times as wide in the transverse direction than in the longitudinal direction.

In accordance with a yet further aspect of the invention, there is provided a moulded brush comprising an elongate spine portion and a plurality of rows of bristles, each row lying in a respective plane extending transversely to the spine portion, each row comprising a plurality of bristles projecting from the spine portion and lying in the respective transverse plane, and each bristle having a flat facet facing in a longitudinal direction of the spine portion.

The brush may have other preferred features arising from the preferred features specified above of the mould according to said one aspect of the invention.

Specific embodiments of the invention will now be described by way of example with reference to the accompanying drawings, in which:

Figure 1 is a plan view of a mould according to one aspect of the invention;

Figure 2 is a side view of the mould part-open, sectioned by the plane designated II-II in Figure 1;

Figure 3 is a face view, on a larger scale, of a moulding plate used in the mould of Figures 1 and 2 viewed in the direction III shown in Figure 2;

Figure 4 is an edge view of a stack of such plates, shown slightly separated for clarity, sectioned by the plane designated IV-IV in Figure 3;

Figure 5 is similar to Figure 4, but showing a stack of modified plates;

Figure 6 is smilar to Figure 3, but showing a pair of other moulding plates;

Figure 7 is a sectioned plan view of a brush according to another aspect of the invention;

Figure 8 is an end view of the brush of Figure 7;

Figure 9 is a sectional view, on an enlarged scale, taken along the section line IX-IX in figure 3, but showing modified moulding plates; and

Figure 10 is a side view of a further brush according to the invention.

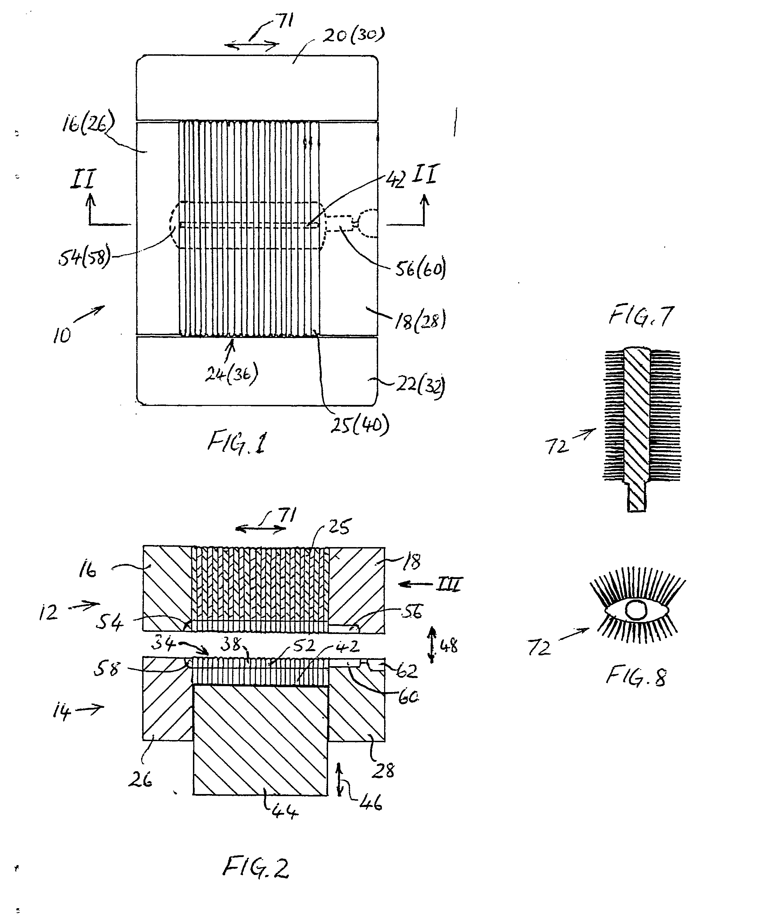

Referring to Figures 1 and 2, a mould 10 comprises first and second mould portions 12,14. The first mould portion includes a pair of end members 16,18 and a pair of side members 20,22 arranged as a rectangle embracing a first stack 24 of mould plates 25. The second mould portion similarly includes end members 26,28 and side members 30,32 embracing two stacks 34,36 of mould plates 38,40. The plates 38,40 of the stacks 34,46 are slightly less than half as wide as the plates of the first stack 24, and the stacks 34, 36 are arranged side-by-side to define a slot 42 therebetween to receive an ejector blade 44 movable in the direction 46. The members forming each mould portion are releasably clamped together, by an arrangement not shown, and squeeze the respective stacks of plates therebetween. Furthermore, the mould portions 12,14 are relatively movable in the direction 48 and can be held together by an arrangement not shown.

Referring to Figures 1, 2, 3 and 6, each mould plate 25 is generally rectangular and has a lower edge with a recess 50. Similarly, each side by side pair of mould plates 38,40 have a generally rectangular outline with a recess 52 in the upper edge. When the mould portions 12,14 are clamped together, the recesses 50,52, together with recesses 54,56,58,60 in the end members 16,18,26,28, define a cavity for a stem portion of the brush. The end member 28 is also formed with an inlet port 62 through which plastics material is to be injected into the stem defining cavity.

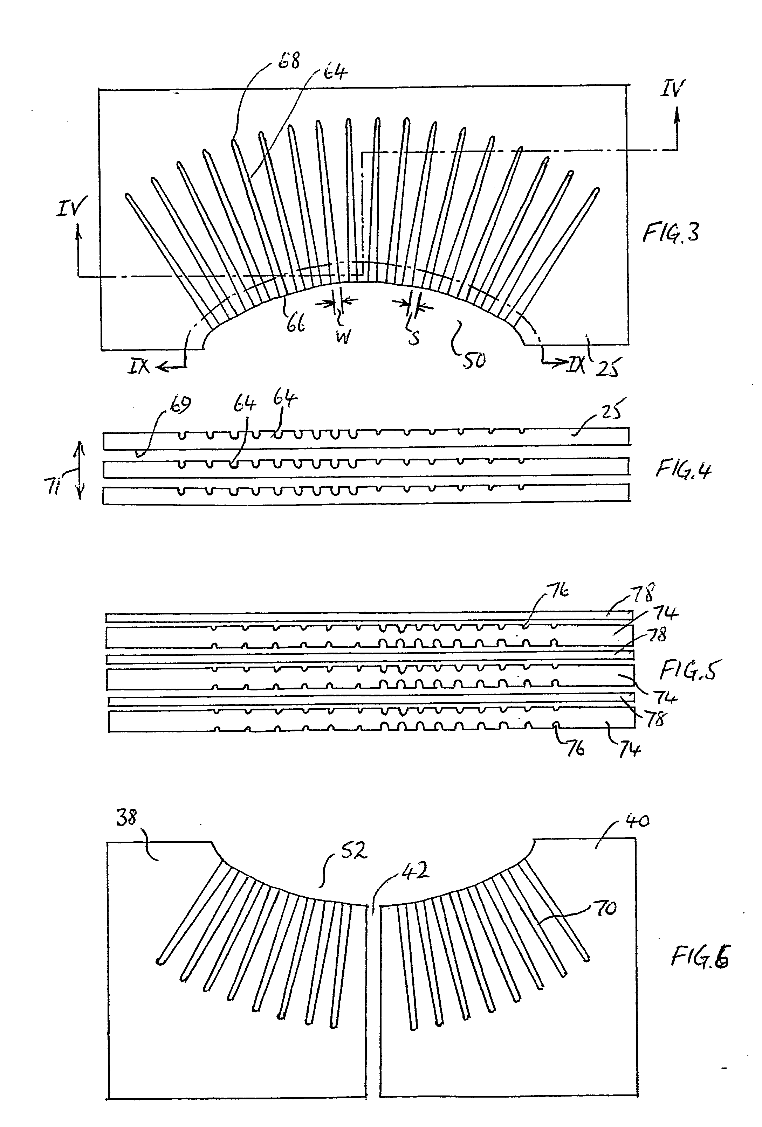

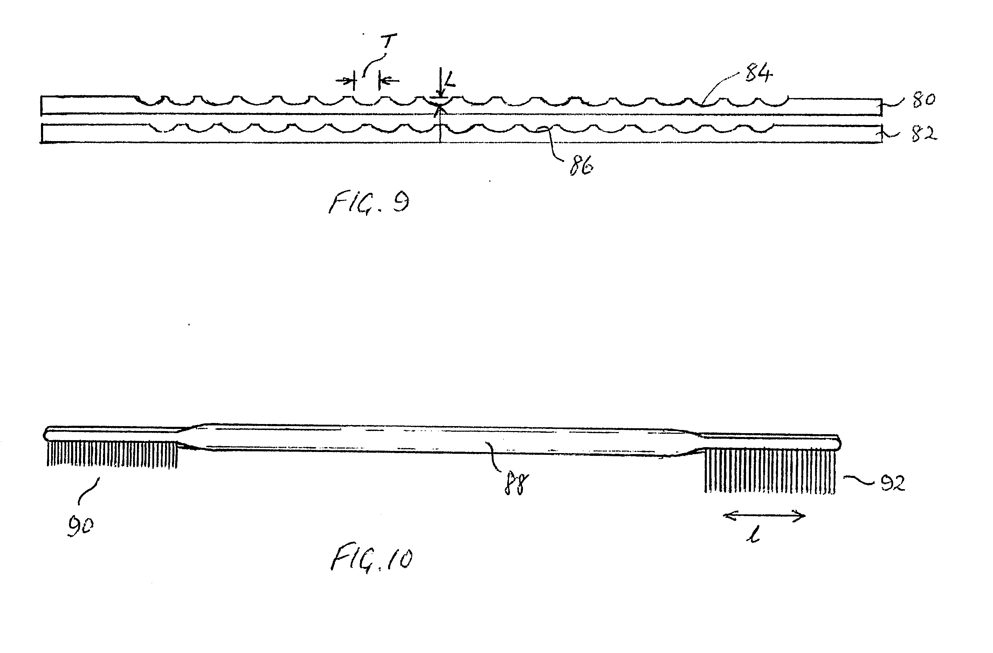

Referring to Figures 3 and 4, the mould plates 25 are formed in one face thereof with a plurality of grooves 64 extending from an end 66 open to the recessed edge 50 divergently to closed ends 68. The grooves 64 taper from the open ends 66 to the closed ends 68. Each groove 64 together with the face 69 of the adjacent plate 25, defines a cavity for forming a bristle of the brush projecting from the stem. It will be noted therefore that each bristle will have a generally rounded cross-section, but with a facet facing in the longitudinal direction 71 of the stem defining cavity. Referring to Figure 6, the other plates 38,40 are formed with similar, except shorter, bristle defining grooves 70 to provide a bank of bristles extending in generally the opposite direction to those formed by the grooves 64 in the plates 25.

As shown in Figures 3 and 6, at the recessed edge, the spacing S between adjacent grooves 64 is approximately equal to the width W of each groove 64.

In order to mould a brush, the mould protions 12,14 are clamped together, and the position of the ejector blade 44 in the slot 42 is adjusted so that its upper edge (as viewed in Figure 2) is level with the edges of the recess 52, that is, so that the blade 44 does not project into the stem defining cavity. Plastics material is then injected through the port 62 so that it fills all of the grooves 64,70 and also the stem defining cavity. Once the plastics material has solidified, the mould portions 12,14 are separated in the direction 48. The resilience of the moulded material permits the bristles formed in the mould portion 12 to be withdrawn from the mould portion 12, leaving the moulded brush in the mould portion 14. The ejector blade 44 is then moved upwardly (as viewed in Figure 2) to release the brush from the mould portion 14.

The gum brush 72 produced by the mould is shown in Figures 7 and 8.

Should any of the bristles break during extraction from the mould portions 14,16, it is likely that part of the bristle will remain in the brush-forming groove. Removal of the broken part, or routine cleaning, is made possible by unclamping the mould portions and separating the stacks of plates.

Referring to Figure 5, there is shown a modified arrangement of the grooves in the mould plates. Alternate plates 74 have bristle forming grooves 76 in both faces thereof, and the intermediate plates 78 are plain. Thus, the bristles in one transverse plane of the brush will have facets facing in one longitudinal direction, and the bristles in the adjacent transverse plane will have facets facing in the opposite longitudinal direction. In a further modification of the plate 74, the grooves in the opposite faces of the plate are staggered. Thus the plate is stronger and plain intermediate plates need not necessarily be employed.

Referring to Figure 9, there is shown a pair of mould plates 80, 82 having grooves of different cross-section to those in the previous embodiments. The plate 80 has eighteen grooves 84 in one face thereof, each of the grooves being generally semi-elliptical in cross-section. The width T of each groove (that is in the transverse direction of the finished brush) is about two or three times as great as the depth L of each groove (that is in the longitudinal direction of the finished brush). Other ratios of T:L may be chosen, but the ratio is preferably in the range 1.5:1 to 4:1, and more preferably in the range 2:1 to 3:1. Similarly to the grooves shown in Figures 3 to 5, the grooves 84 taper, both in the T and L directions, towards the closed end of the groove.

The other plate 82 is similar to the plate 80, except that it has only seventeen grooves 86, which are offset with respect to the grooves 84 in the plate 80. The plates 80, 82 are arranged in the mould alternately in the order 80, 82, 80, 82, ...., so that in the finished brush the bristles in adjacent rows are staggered.

The modification described with reference to Figure 5 may also be applied to the arrangement of Figure 9, that is half of the plates may have grooves in both faces thereof, which may be staggered, and the alternate plates may have plain faces.

The gum brush shown in Figure 10 has an elongate handle 88, and single-sided brush heads 90, 92 are provided at the opposite ends of the handle. The brush heads 90, 92 may be formed in any of the manners described above and are preferably moulded integrally as one piece with the handle 88, but may alternatively be attached to the handle after moulding. The bristles of the two brush heads 90, 92 may have different lengths and/or different cross-sections and/or different densities in order to provide different brushing characteristics.

Preferably, the brush heads 90, 92 of the gum brush shown in Figure 10 (or the head if only one is provided) are formed in the manner described with reference to Figure 9. In this case the bristles will be more flexible upon bending in the longitudinal direction of the brush, denoted by the arrow 1, than in the transverse direction of the brush, that is in the direction into and out of the plane of the paper as viewed in Figure 10.

## Claims

1. A moulded brush comprising an elongate spine portion and a plurality of rows of bristles, projecting from the spine portion and lying in respective transverse planes, characterised in that each bristle having a cross-section adjacent the spine portion which is substantially wider in the transverse direction of the spine portion than in the longitudinal direction thereof, so that the bristle is more flexible upon bending in said longitudinal direction than in said transverse direction.

2. A brush as claimed in claim 1, wherein each bristle has a flat facet facing in said longitudinal direction.

3. A moulded brush comprising an elongate spine portion and a plurality of rows of bristles projecting from the spine portion and lying in respective transverse planes, characterised in that each bristle has a flat facet facing in a longitudinal direction of the spine portion.

4. A brush as claimed in claim 2 or 3 wherein all of the facets face in the same longitudinal direction of the spine portion.

5. A brush as claimed in any of claims 2 to 4, wherein the facets of the bristles in adjacent rows face in opposite longitudinal directions of the spine portion.

6. A brush as claimed in any preceding claim, wherein each bristle tapers from the spine portion to a free end thereof.

7. A brush as claimed in any preceding claim, wherein the bristles in each row diverge from each other.

8. A brush as claimed in any preceding claim, wherein the rows of bristles form a bank of bristles disposed generally to one side of the spine portion, and further comprising another such bank of bristles disposed generally to an opposite side of the spine portion to form a double-sided brush.

9. A brush as claimed in claim 8, wherein the bristles of one of the banks are generally shorter than the bristles of the other bank.

10. A brush as claimed in any preceding claim, further comprising a handle, the bristled spine portion being disposed at one end of the handle, and a further such bristled spine portion being disposed at the other end of the handle.

11. A mould for forming a brush, comprising a pair (12,14) of separable complementary mould portions defining a cavity for forming an elongate spine portion and cavities for forming a plurality of rows of bristles, characterised in that at least one of the mould portions comprises a stack (34, 46) of separable plates each lying in a plane extending transversely of the spine-forming cavity, and at least half of the plates each having a plurality of grooves (64, 70, 84, 86) each open at one end to the spine-forming cavity and closed at the other end and each defining a respective one of the bristle-forming cavities.

12. A mould as claimed in claim 11, wherein each bristle-forming cavity has a cross-section adjacent the spine-forming cavity which is wider in the transverse direction (T) of the spine-forming cavity than in the longitudinal direction (L) thereof.

13. A mould as claimed in claim 11 or 12, wherein each plate has such grooves in one face thereof, the opposite face thereof being plane (Fig 4, Fig 9).

14. A mould as claimed in claim 11 or 12, wherein alternate plates in the stack have such grooves in both faces thereof, the intermediate plates having plane faces (Fig 5).

15. A mould as claimed in any of claims 11 to 14, wherein each bristle forming groove tapers from the open end to the closed end thereof.

16. A mould as claimed in any of claims 11 to 15, wherein the grooves in each plate diverge from each other.

17. A mould as claimed in any of claims 11 to 16, wherein both mould portions comprise such stacks of separable plates.

18. A mould as claimed in any of claims 11 to 17, wherein each mould portion defines a respective portion of the spine-forming cavity.

19. A mould as claimed in any of claims 11 to 18, wherein at least one of the plates defines a passageway (42) extending from the spine-forming cavity to the exterior of the mould to receive an ejector device.

20. A mould as claimed in any of claims 11 to 19, wherein each plate has generally parallel faces.

21. A method of moulding a brush using a mould as claimed in any of claims 11 to 20, comprising the steps of injecting a mouldable material into the spine-forming cavity so that the material also passes into the bristle-forming cavities, allowing the material to cure, then separating the mould portions so as to leave the cured material attached to one of the mould portions, and then removing the cured material from that mould portion.

22. A method as claimed in claim 21, wherein the stack of plates of said one mould portion are routinely held clamped together during removal of the cured material from the mould portion, said stack of plates being separated for removal of any broken portions of the cured material and for cleaning of the plates.

FIG. 1

FIG. 2

FIG. 7

FIG. 8

FIG.3

FIG.4

FIG.5

FIG.6

FIG. 9

FIG. 10

EP 0 295 900 A2